# EUROPEAN PATENT SPECIFICATION

(11) **EP 3 148 024 B1**
(45) Date of publication and mention of the grant of the patent: **15.04.2020**
(21) Application number: 15894517.0
(22) Date of filing: 22.10.2015
(51) Int. Cl.: H02G 3/06

(54) **CABLE TRAY COUPLING SYSTEM**
KABELRINNENKOPPLUNGSVORRICHTUNG
RACCORD POUR PLATEAUX PORTE-CÂBLES

(30) Priority: 17.06.2015 ES 201530712 U
(43) Date of publication of application: 29.03.2017
(73) Proprietor: Basor Electric S.A., 46701 Gandia (Valencia) (ES)
(72) Inventor: BAÑULS TOBARUELA, Javier, E-46701 Gandia (Valencia) (ES)
(74) Representative: Isern Patentes y Marcas S.L.
(86) International application number: PCT/ES2015/070763
(87) International publication number: WO 2016/203068

(56) References cited:
- EP-A1- 0 695 009
- EP-A1- 0 695 009
- EP-A1- 2 833 496
- EP-A1- 2 833 496
- EP-A2- 0 057 879
- EP-A2- 0 057 879
- EP-A2- 2 234 230
- EP-A2- 2 280 463
- ES-U- 1 070 765
- FR-A1- 2 686 141

## Description

### OBJECT OF THE INVENTION

The object of the present application is to register a joint for cable holder trays of the types used in industrial installations for the passage of electrical conduits.

More specifically, the invention proposes the development of a joint for cable holder trays, the tray being formed by a sheet folded substantially in a U shape which has a base and two lateral walls which includes a male section with a transversal section with smaller dimensions with respect to the rest of the sheet which allows an assembly of the trays in a linear manner, that is to say, they are coupled by approximating one cable holder tray towards the other adjacent tray, also providing an improved fixing and resistance to bending in the joint area between trays.

### BACKGROUND OF THE INVENTION

It is abundantly known when using trays for the passage and guidance of electric cables in industrial installations such that the cables are hidden and protected with the possibility of placing an upper cover. One embodiment of a known joint is that described in the patent no. ES 2 156 487 from the same holder where a sheet is described which is folded substantially in a U shape which defines a housing where the cables rest, allowing a linear coupling of the trays. However, screw elements are used for the joint between adjacent trays; as a result a tool and greater assembly time are required. Document EP2280463A2 discloses a system to connect two consecutive cable trays using a single piece joint.

In addition, the applicant who is the holder of various industrial property registrations related to cable holder trays does not known of any invention which has all the characteristics which are described in this specification.

### DESCRIPTION OF THE INVENTION

The present invention has been developed with the aim of providing a joint for cable holder trays which is configured as a novelty within the field of application and resolves the previously mentioned drawbacks, also providing other additional advantages which will be evident from the description which is included below.

It is therefore an object of the present invention to provide a joint for cable holder trays in which the tray is formed by a sheet folded substantially in a U shape which has a base and two lateral walls provided with a band which includes a male section with a predetermined length with a transversal section with smaller dimensions with respect to the rest of the sheet, the male section being free from the band and being couplable into an opposing end of an adjacent sheet such that in a coupling condition of two adjacent trays, the lateral walls and the base of the trays are overlapping each other in which the male section is located in the interior of the adjacent sheet.

More particularly, the invention is characterized in that it comprises a joint piece formed from a folded body which defines two fins which adopt a general configuration substantially in an L shape in which each one of the two fins has a tab couplable by way of a snap-in connection such as a clip in respective through-holes present on the male section, the fin of the joint piece which is connected to the lateral wall of the tray having coupling means provided for being coupled to the lateral wall of the tray.

Owing to these characteristics, the coupling of cable holder trays is carried out in a linear manner, that is to say, without having to fit the trays from above or from below, but rather in an opposing manner together with a joint piece, also ensuring the linearity of the installation, thus avoiding bulges along an installation formed by a plurality of cable holder trays and ensures rapid and secure fixing due to the presence of the joint piece, also improving the resistance to bending and ensuring suitable electric continuity owing to the fit pressure exerted especially by the tab present on the horizontal section of the joint piece.

Preferably, the tab of the joint piece connected to the lateral wall of the tray protrudes outwards in an inclined manner with respect to the surface of the fin from which it protrudes such that in a coupling situation, the manual separation of the two adjacent and coupled trays is prevented since the return movement of the coupled tray is prevented.

Another advantage with no less important of this type of joint described above is the absence of screw elements for fixing the trays, as a result no type of specialist tool is necessary.

According to the invention, the coupling means consist of two folded portions which protrude from the exterior face of the fin connected to the lateral wall of the tray, such portions being capable of being folded and passing through-holes made into the lateral wall of the tray.

Preferably, the joint piece previously described may be made of metal material.

Other characteristics and advantages of the joint for cable holder trays object of the present invention will be evident from the description of a preferred, but not exclusive embodiment which is illustrated by way of nonlimiting example in the drawings which are included, in which:

### BRIEF DESCRIPTION OF THE DRAWINGS

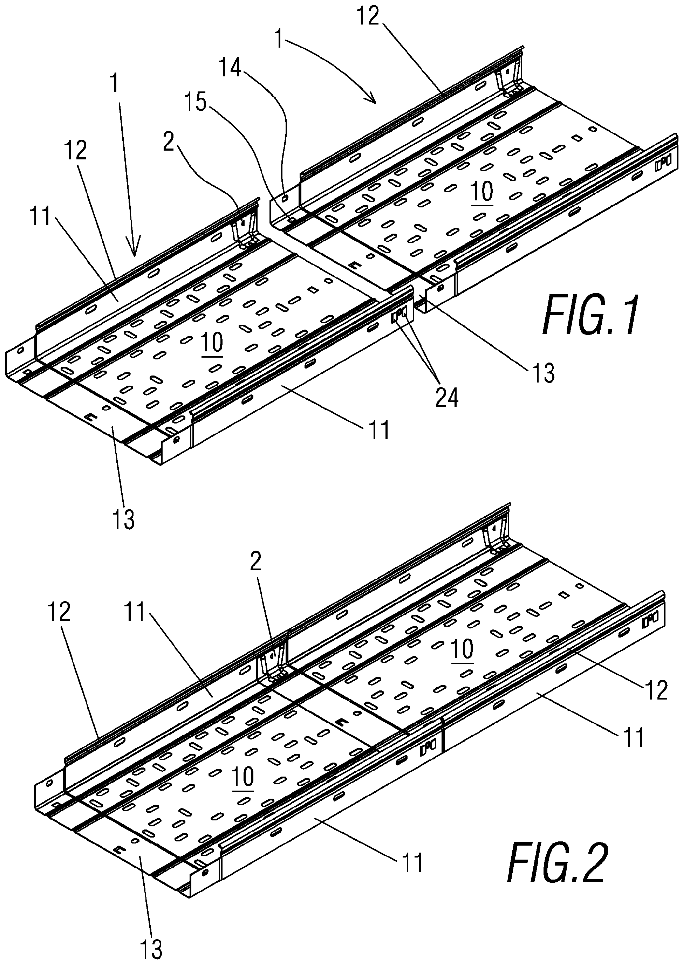

Figure 1 is a perspective view of two cable holder trays prior to being coupled together;
Figure 2 is a perspective view of two cable holder trays coupled to the joint system according to the invention;
Figure 3 is a detail front perspective view of the joint piece, the folded portions being extended prior to being folded for the assembly thereof;
Figure 4 is a detail rear perspective view of the joint piece, represented in Figure 3; and
Figure 5 is a view of an individual tray.

### DESCRIPTION OF A PREFERRED EMBODIMENT

In view of the mentioned figures, and in accordance with the adopted numeration, in said figures a preferred exemplary embodiment of the invention may be observed which comprises the parts and elements which are indicated and described in detail below.

The joint for cable holder trays is provided for allowing trays (1) to be joined which are each formed by a sheet folded substantially in a U shape which has a base (10) and two lateral walls (11) provided at the top with a reinforcement band (12). One of the ends of the tray (1) includes a male section (13) with a predetermined length with a transversal section with smaller dimensions with respect to the rest of the sheet, the male section being free of the reinforcement band (12). The male section (13) may be coupled into an opposing end of an adjacent sheet such that in a condition where the two adjacent trays are coupled one above the other, the lateral walls (11) and the base (10) of the trays are overlapping each other in which the male section is located in the interior of the adjacent sheet in a coplanar manner. Optionally, an upper cover may be provided (not shown) for covering the interior housing defined by each tray (1).

In order to ensure the fixing in the joint between the trays, a pair of joint pieces (2) is provided situated on the lateral walls (11), each of these being formed from a stamped metal body which is defined by two fins (20, 21) which adopt a general configuration substantially in an L shape. Each one of the two fins (20, 21) has a tab (22, 23) which is coupled by a snap-in connection or clip into respective through-holes (14, 15) present in the male section (13), the fin of the joint piece (2) that is connected to the lateral wall of the tray (1) having coupling means provided for being coupled to the lateral wall of the tray, which will be explained in greater detail below. In this embodiment, the tab (23) consists of a centered depression which is inserted manually by means of applying pressure exerted laterally until the tab (23) reaches or fits into the through-hole (15) which provides a pressure area on the two trays, thus reducing the degree of impedance, that is to say, it improves the electric continuity value between trays.

In this way, the use of screws such as tools is not necessary for carrying out the screwing action to integrally connect two adjacent trays, especially relating to the joint of the trays at their base. In addition, the tab (22), once the trays are placed in a coupling condition, prevents the separation of both since it prevents the return movement of the male section (13) with respect to the tray to which the cited male section (13) is fixed. This is a result of the tab (22) connected to the lateral wall of the tray protruding outwards in an inclined manner with respect to the surface of the fin from which it protrudes.

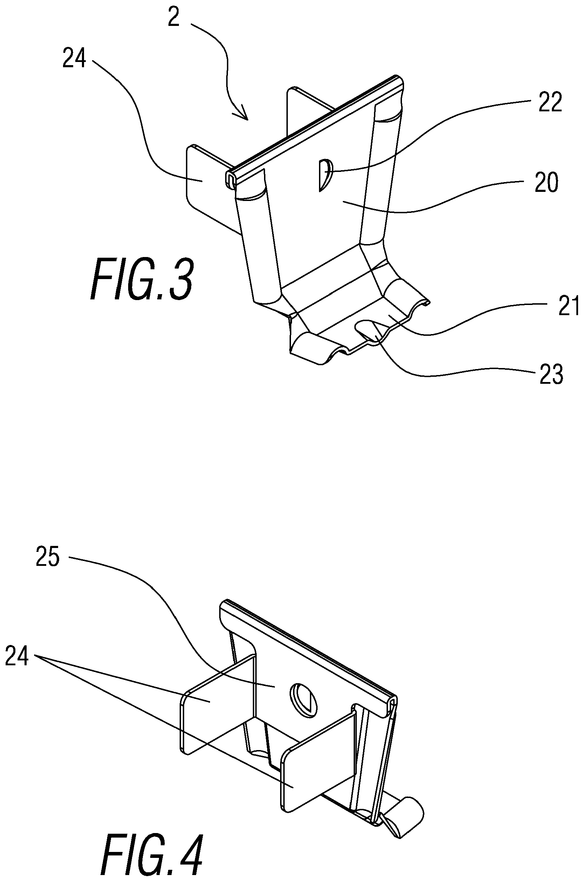

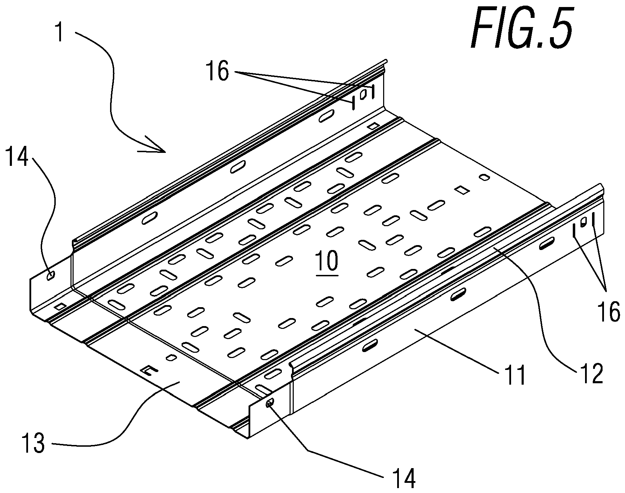

As may be seen more clearly in Figure 4, the coupling means consist of two foldable portions (24) which protrude from the exterior face of the fin connected to the lateral wall of the tray, such portions being capable of being folded and passing through through-holes (16) made into the lateral wall of the tray (1), as may be seen in Figure 5. More specifically, the two foldable portions (24) extend from two opposing laterals of a section (25) which, in an assembled condition of the joint piece, are hidden and face the lateral wall (11) of the tray (1).

The details, the forms, the dimensions and other accessory elements used in obtaining the joint of the invention could be conveniently substituted for others which do not depart from the scope defined by the claims which are included below.

## Claims

1. A system comprising a cable tray and a joint for the cable tray in which the tray (1) is formed by a sheet folded substantially in a U shape which has a base (10) and two lateral (11) walls provided with a band (12), which includes a male section (13) with a predetermined length with a transversal section with smaller dimensions with respect to the rest of the sheet, the male section (13) being free of the band (12) and being couplable into an opposing end of an adjacent sheet, such that in a coupling condition of two adjacent trays to each other, the lateral walls and the base of the trays are overlapping each other, the male section (13) being located in the interior of the adjacent sheet in a coplanar manner, the joint comprising at least one joint piece (2) **characterized in that** the joint piece (2) is formed from a folded body which defines two fins (20, 21) which adopt a general configuration substantially in an L shape in which each one of the two fins (20, 21) has a tab (22, 23) couplable by way of a snap-in connection in through-holes (14, 15) present on the male section (13), the fin (20) of the joint piece (2) which is connected to the lateral wall (11) of the tray (1) having coupling means provided for being coupled to the lateral wall (11) of the tray (1), and the coupling means consist of two portions capable of being folded in an assembled condition which protrude from an additional section (25) present on the exterior face of the fin connected to the lateral wall of the tray, such foldable portions being capable of being folded and passing through through-holes made in the lateral wall of the tray.

2. The system according to claim 1, **characterized in that** the tab (22) of the joint piece connected to the lateral wall (11) of the tray (1) protrudes outwards in an inclined manner with respect to the surface of the fin (20) from which it protrudes.

3. The system according to claim 1, **characterized in that** the tab (23) of the joint which is connected to the base of the cable tray consists of a centered depression which is inserted manually by means of applying pressure exerted laterally until the tab (23) reaches or fits into the through-hole (15).

4. The system according to claim 1, **characterized in that** the joint piece is made of metal material.

## Patentansprüche

1. System, umfassend eine Kabelpritsche und eine Verbindung für die Kabelpritsche, wobei die Pritsche (1) durch ein im Wesentlichen in einer U-Form gefaltetes Blech ausgebildet ist, und eine Basis (10) und zwei Seitenwände (11) hat, die mit einem Streifen (12) bereitgestellt sind, und die einen Steckabschnitt (13) mit einer vorbestimmten Länge mit einem Querschnitt mit kleineren Abmessungen in Bezug auf den Rest des Blechs einschließt, wobei der Steckabschnitt (13) frei von dem Streifen (12) ist und mit einem gegenüberliegenden Ende eines benachbarten Blechs koppelbar ist, sodass sich in einem Kopplungszustand von zwei benachbarten Pritschen miteinander, die Seitenwände und der Boden der Pritschen überlappen, wobei sich der Steckabschnitt (13) in komplanarer Weise im Inneren des benachbarten Blechs befindet, wobei die Verbindung mindestens ein Verbindungsstück (2) umfasst, **dadurch gekennzeichnet, dass** das Verbindungsstück (2) aus einem gefalteten Körper ausgebildet ist, der zwei Rippen (20, 21) definiert, die eine allgemeine Konfiguration, im Wesentlichen in einer L-Form, annehmen, in der jede der beiden Rippen (20, 21) eine Lasche (22, 23) hat, die über eine Einrastverbindung mit Durchgangslöchern (14, 15), die auf dem Steckabschnitt (13) vorhanden sind, koppelbar ist, wobei die Rippe (20) des Verbindungsstücks (2), die mit der Seitenwand (11) der Pritsche (1) verbunden ist, Kopplungsmittel hat, die bereitgestellt sind, um mit der Seitenwand (11) der Pritsche (1) gekoppelt zu werden, und wobei die Kopplungsmittel aus zwei Abschnitten bestehen, die in einem zusammengebauten Zustand gefaltet werden können, und die von einem zusätzlichen Abschnitt (25) vorstehen, der an der Außenseite der Rippe vorhanden ist, die mit der Seitenwand der Pritsche verbunden ist, wobei solche faltbaren Abschnitte gefaltet werden und durch Durchgangsbohrungen hindurchgehen können, die in der Seitenwand der Pritsche ausgebildet sind.

2. System nach Anspruch 1, **dadurch gekennzeichnet, dass** die Lasche (22) des Verbindungsstücks, die mit der Seitenwand (11) der Pritsche (1) verbunden ist, in Bezug auf die Oberfläche der Rippe (20), von der sie vorsteht, in einer geneigten Weise nach außen vorsteht.

3. System nach Anspruch 1, **dadurch gekennzeichnet, dass** die Lasche (23) der Verbindung, die mit der Basis der Kabelpritsche verbunden ist, aus einer zentrierten Vertiefung besteht, die manuell durch Aufbringen von Druck, der seitlich ausgeübt wird, eingeführt wird, bis die Lasche (23) die Durchgangsbohrung (15) erreicht oder in diese passt.

4. System nach Anspruch 1, **dadurch gekennzeichnet, dass** das Verbindungsstück aus Metallmaterial hergestellt ist.

## Revendications

1. Système comprenant un chemin de câbles et une articulation pour le chemin de câbles dans lequel le chemin (1) est composé d'une tôle pliée sensiblement en forme de U qui a une base (10) et deux parois latérales (11) pourvues d'une bande (12), qui comporte une section mâle (13) avec une longueur prédéterminée avec une section transversale de plus petites dimensions par rapport au reste de la tôle, la section mâle (13) étant exempte de la bande (12) et pouvant être couplée dans une extrémité opposée d'une tôle adjacente, de telle sorte que dans un état de couplage de deux chemins adjacents l'un à l'autre, les parois latérales et la base des chemins se chevauchent, la section mâle (13) étant située à l'intérieur de la tôle adjacente de manière coplanaire, l'articulation comprenant au moins une pièce d'articulation (2) **caractérisée en ce que** la pièce d'articulation (2) est composée d'un corps plié qui définit deux ailettes (20, 21) qui adoptent une configuration générale sensiblement en forme de L dans laquelle chacune des deux ailettes (20, 21) a une languette (22, 23) pouvant être couplée au moyen d'un raccordement par encliquetage dans des orifices traversants (14, 15) présents sur la section mâle (13), l'ailette (20) de la pièce d'articulation (2) qui est raccordée à la paroi latérale (11) du chemin (1) ayant des moyens de couplage prévus pour être couplés à la paroi latérale (11) du chemin (1), et les moyens de couplage consistent en deux portions susceptibles d'être repliées à l'état assemblé qui font saillie sur une section supplémentaire (25) présente sur la face extérieure de l'ailette raccordée à la paroi latérale du chemin, ces portions pliables pouvant être pliées et passant à travers des orifices traversants pratiqués dans la paroi latérale du chemin.

2. Système selon la revendication 1, **caractérisé en ce que** la languette (22) de la pièce d'articulation raccordée à la paroi latérale (11) du chemin (1) fait saillie vers l'extérieur de manière inclinée par rapport à la surface de l'ailette (20) à partir de laquelle elle fait saillie.

3. Système selon la revendication 1, **caractérisé en ce que** la languette (23) de l'articulation qui est raccordée à la base du chemin de câbles consiste en une dépression centrée qui est insérée manuellement en appliquant une pression exercée latéralement jusqu'à ce que la languette (23) atteigne ou s'insère dans l'orifice traversant (15).

4. Système selon la revendication 1, **caractérisé en ce que** la pièce d'articulation est en matériau métallique.
